# EUROPEAN PATENT SPECIFICATION

(11) **EP 1 493 327 B1**
(45) Date of publication and mention of the grant of the patent: **08.04.2009**
(21) Application number: 03023048.6
(22) Date of filing: 14.10.2003
(51) Int. Cl.: A01G 5/04

(54) **Floral display system**
Präsentationssystem für Blumen
Système de présentation florale

(30) Priority: 30.06.2003 US 609813
(43) Date of publication of application: 05.01.2005
(73) Proprietor: Smithers-Oasis Company, Cuyahoga Falls, OH 44221 (US)
(72) Inventor: Walton, Charles F., Hudson Summit Ohio (US)
(74) Representative: Kesselhut, Wolf

(56) References cited:
- EP-A- 0 857 416
- US-A- 2 891 354
- US-A- 2 922 254
- US-A- 3 201 900
- US-A- 6 145 245

## Description

### TECHNICAL FIELD

In general, the present invention relates to floral display systems. More particularly, the present invention relates to a floral display system having an internally defined reservoir. Most particularly, the present invention relates to floral display system that has a closed center surrounded by a wall of media defining a reservoir therebetween.

### BACKGROUND OF THE INVENTION

In creating floral displays, live plants and flowers, cut flowers, and decorative objects are implanted in "media" such as soils, organic mixes, and floral foams. At times, displays are created using materials that are suitable for supporting the display materials, but not optimal for live plant maintenance, for example, cardboard, plastic, chicken wire, and closed cell foams. For purposes of this description, the term "media" encompasses these materials as well.

When using foam bricks, the plant material and decorative objects are implanted in the brick and then the brick is placed within a pot or other attractive container. As will be appreciated, at this point, the floral display is not easily modified without removing the plant material. Consequently, a system that provides the versatility of altering the look or theme of an arrangement in a more expeditious manner is desirable.

Another common floral display form is a wreath. Wreaths are often formed by arranging a base plant material in a circular form with wire and then implanting flowers or other decorative objects within the base plant material. Also, wreath-shaped foam rings are available for implanting flowers and other decorative material to create a wreath. To extend the life of the plant material, wettable floral foams are often used. To provide a water supply for the plant material, the designer wets the floral foam ring before implanting the plant material such that the plant material may draw water therefrom. Once the plant material is implanted, however, it is difficult to re-wet the floral foam because the water often runs off before it is absorbed by the foam, often spilling onto the table or other supporting surface upon which the wreath is placed. A lack of a continuous water supply limits the life span of the plant material planted in such floral foam rings.

In terms of commercially created displays, wreaths may often be used to create centerpieces for tables, where additional plant material or decorative objects are placed within the center of the wreath. Since there is no means of supporting this material within the center, the complete arrangement is not easily transported and each floral display must be assembled on site. As can be appreciated when creating a number of floral displays, such as at a wedding or other event requiring a great number of centerpieces, separate assembly of the wreath and the center can be quite time consuming. It is thus, desirable to create the entire arrangement at the florist or other designer's place of business and transport the completed design to the consumer.

EP -A- o 857 416 discloses a floral display system having an upstanding wall of media made of a floral foam which is surrounded by a water impervious shell at the bottom thereof. The shell spans an opening in form of a channel, which extends from a reservoir on top of the floral foam to a cavity at the bottom thereof. The bottom of the cavity is defined by the straight and smooth inner surface of the outer water impervious shell, so that the water supplied to the cavity through the channel is not directed radially outward toward the media.

### SUMMARY OF INVENTION

It is therefore, an object of the present invention to provide a floral display device having a convex closed center.

It is another object of the present invention to provide a floral display device having a wall of media surrounding a convex closed center.

It is yet another object of the present invention to provide a floral display device defining an internal reservoir for supplying water to surrounding media.

At least one or more of the foregoing objects, together with the advantages thereof over the known art relating to floral display systems, which shall become apparent from the specification which follows, are accomplished by the invention as hereinafter described and claimed.

In general the present invention provides a floral display system including an upstanding wall of media defining an opening; a water impervious center spanning the opening wherein the center has a top surface located below the top surface of the media to form a reservoir between the center and the media.

The present invention further provides a floral display system including an upstanding wall of media having a top surface and a bottom surface, the top surface being vertically spaced from the bottom surface, and an outer surface and an inner surface extending between the top and bottom surfaces, where the inner surface and outer surface are laterally spaced from one another and the inner surface defines an opening. A water impervious center spans the opening and has a center top surface located below the top surface of the media to form a reservoir between the center and the wall of media.

The present invention further provides a method of making a floral display including providing a water impervious shell having a wall of media extending upward therefrom, the wall of media defining an open reservoir between the inner surface of the media and the center of the shell; implanting plant material within the media; and wetting the media by pouring liquid into the reservoir.

The present invention further provides a floral display system including a wall of media defining an opening therein; and a shell formed about a lower portion of the media, the shell being attached to the wall of media, covering a bottom surface of the media to close one end of the opening within the media to form a reservoir, wherein the shell is constructed of a water impervious material.

### BRIEF DESCRIPTION OF THE DRAWINGS

Fig. 1 is a perspective view of a floral display device according to the concepts of the present invention;
Fig. 2 is an exploded perspective view of the floral display device depicted in Fig. 1;
Fig. 3 is a top plan view of a floral display device according to the concepts of the present invention;
Fig. 4 is a front elevational view thereof;
Fig. 5 is a left side elevational view thereof;
Fig. 6 is a right side elevational view thereof;
Fig. 7 is a sectional view as might be seen along line 7-7 in Fig. 3 depicting further details of the floral display system including a convex center;
Fig. 8 is a bottom plan view of the floral display system;
Fig. 9 is a perspective view partially sectioned to show details of a floral display system having plant material inserted in media and decorative material located within the media; and
Fig. 10 is a perspective view similar to Fig. 9 depicting an alternative floral display system.

### PREFERRED EMBODIMENT FOR CARRYING OUT THE INVENTION

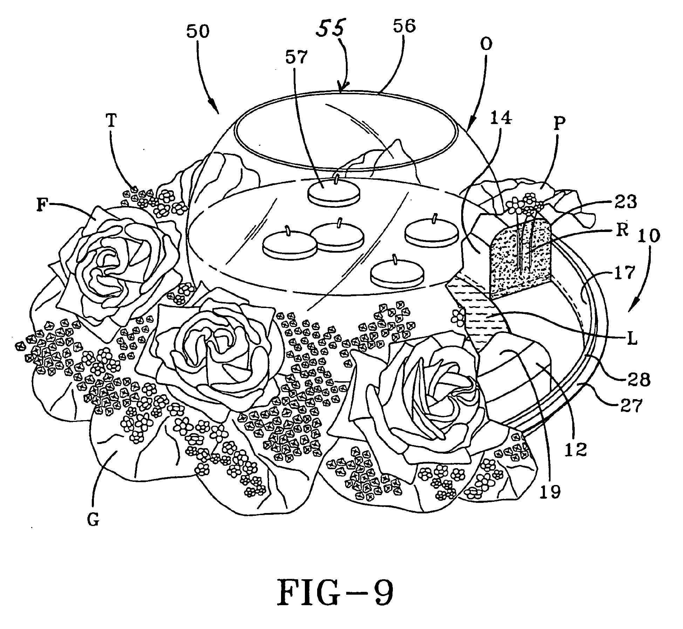

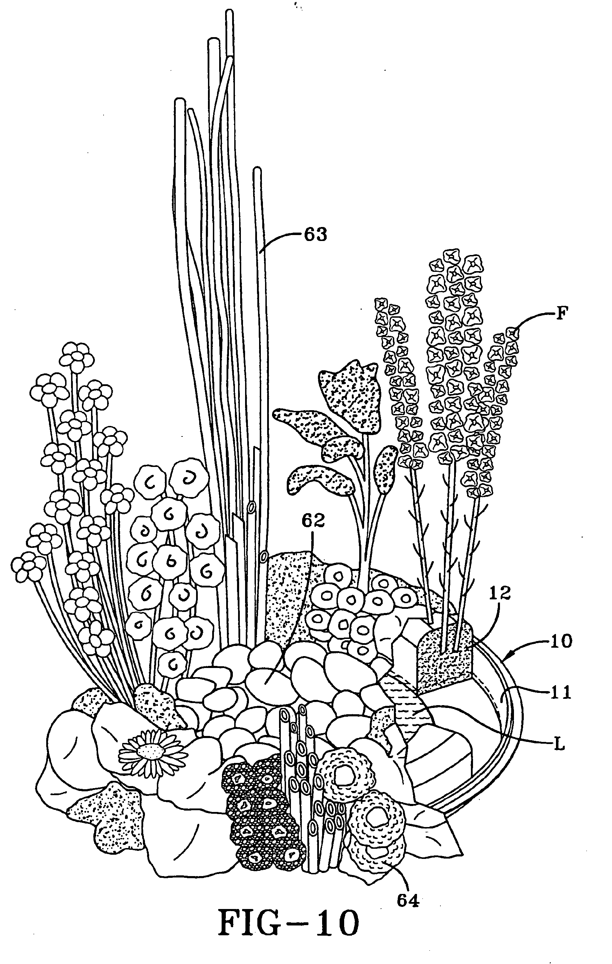

A floral display device according to the concepts of the present invention is generally indicated by the numeral 10 in the accompanying drawings. The display device 10 is used in connection with plant material P and/or decorative objects O (Figs. 9 and 10) to form a floral display system, generally indicated by the numeral 50, and described more completely below. It will be understood, that for purposes of this invention, the term "plant material" includes any organic material and the term "decorative object" includes any inorganic material useful in creating a display. While the selection of these materials are largely the subject of the designer's imagination, some examples are included in the following description. These examples are not to be considered limiting.

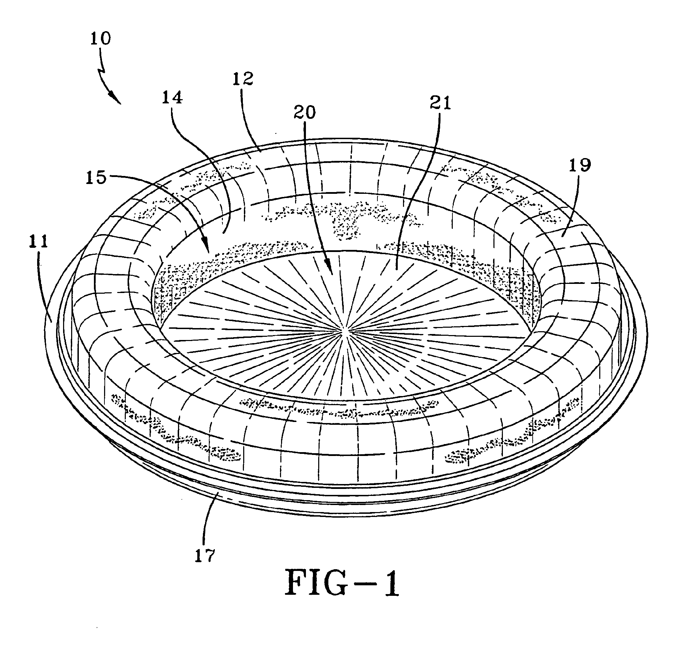

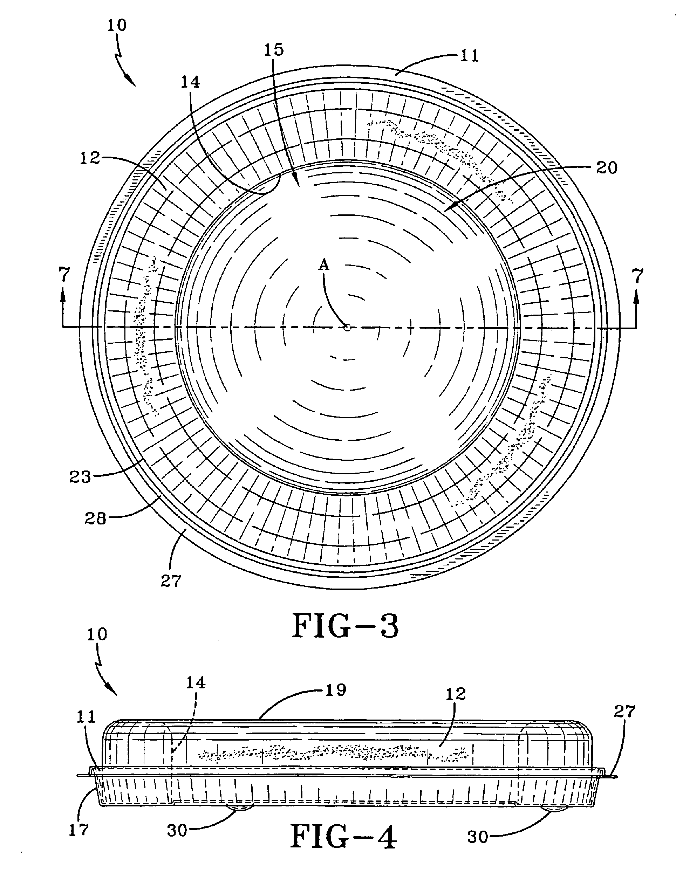

With reference to Fig. 1, the display device 10 generally includes a wall of media 12. The media may be a soil, organic mixture, cardboard; plastic, screen, chicken wire, closed or open celled foam, floral foam such as OASIS@ floral foam, or other material capable of supporting plant material P or decorative objects O. The media 12 may be solid or hollow, and, as in the case of screens, cardboard, or chicken wire may have openings within its surface for receiving plant material P and/or decorative objects O. The media 12 may be a moldable material to allow some shaping of the media 12 including the forming of depressions or holes for the implantation of larger objects including plant bulbs. As best shown in Fig. 3, the media 12 has an inner surface 14 that defines a hollow center. It will be appreciated that while a ring shaped media wall 12 having a circular opening 13 is shown, the media 12 may generally have any closed form including polygonal shapes.

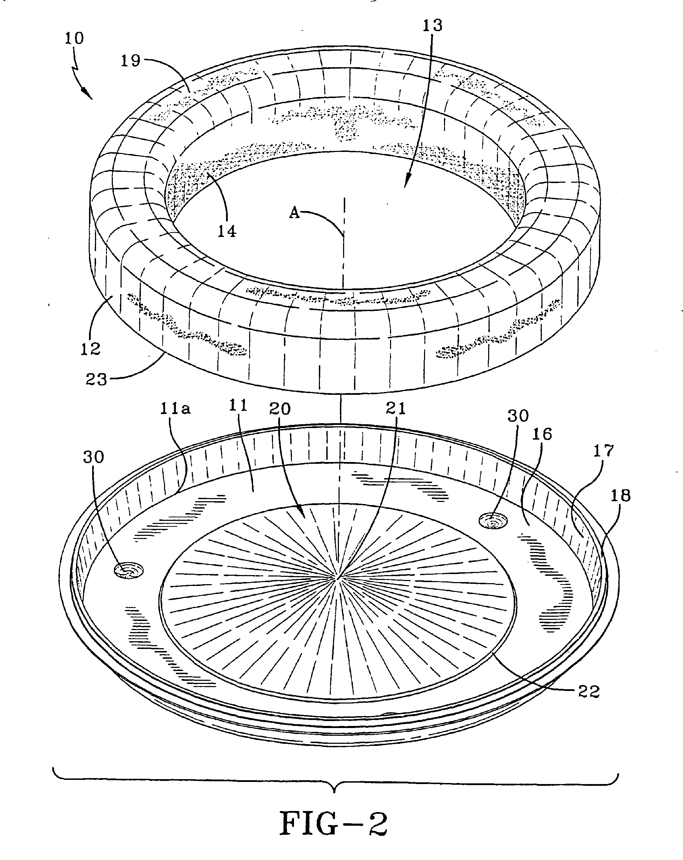

The media 12 surrounds a center, generally referred to by the numeral 20, that provides a base within the media 12 for the arrangement of decorative objects O. The center 20 may be constructed of a water impervious material, for example a plastic material to allow liquid L, such as water or a growth solution, to be fed to the media 12 by pouring it onto the center 20. The center 20 is recessed from the top surface 19 of media 12 defining a reservoir 15 useful in receiving decorative objects O, described more completely below, and/or providing a water supply for the media 12. The center 20 need only fill the opening defined by the inner surface 14, but may optionally be used to support the media 12 and prevent water from draining therefrom. To that end, the center 20 may form a part of shell 11 (Fig. 2). The media 12 may be attached to the shell 11, as by mechanical means including, for example, a post or pin extending upwardly from the shell 11, adhesives, or welding. The media 12 may also be integrally formed with the center 20 or shell 11. For purposes of describing the invention, use of the word "attached" will include this integral formation. The shell 11 may resemble the shape of the media 12 and include a shell wall 17 that extends upwardly from the periphery 11a of the shell 11 outside of the media 12. In this way, shell wall 17 may circumscribe at least a portion of the media 12 to prevent any leaking in the radial outward direction.

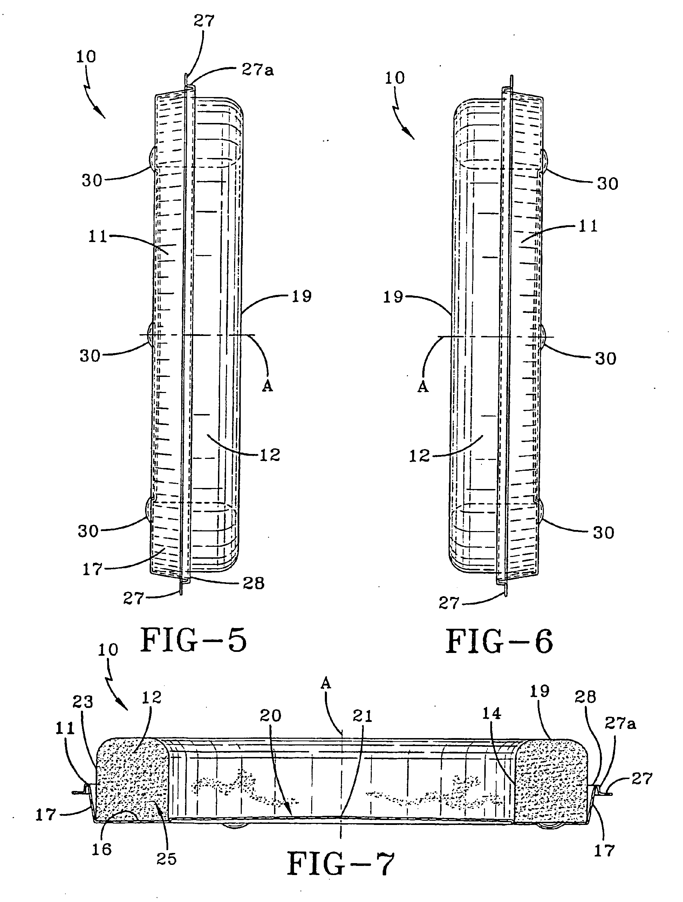

As best shown in Figs. 4 and 7, the wall 17 may extend radially outward as it extends axially upward such that the wall 17 flares outward from the media 12. A clearance is thus provided between a lower portion or base 25 of media 12 allowing air to circulate therein and allowing implantation of plant material P or decorative objects O over a greater portion of the outer surface 23 of media 12 than a shell 11 having a form fitting wall 17.

With reference to Fig. 7, a flange 27 or other projection may extend radially outward from wall 17. Flange 27 provides a convenient means for grasping and transporting the floral display device 10. In the example shown, flange 27 may include a downwardly extending portion 27a that extends downwardly and outwardly from a rim 28 of wall 17, such that, in effect, the wall 17 folds back upon itself improving its strength and rigidity.

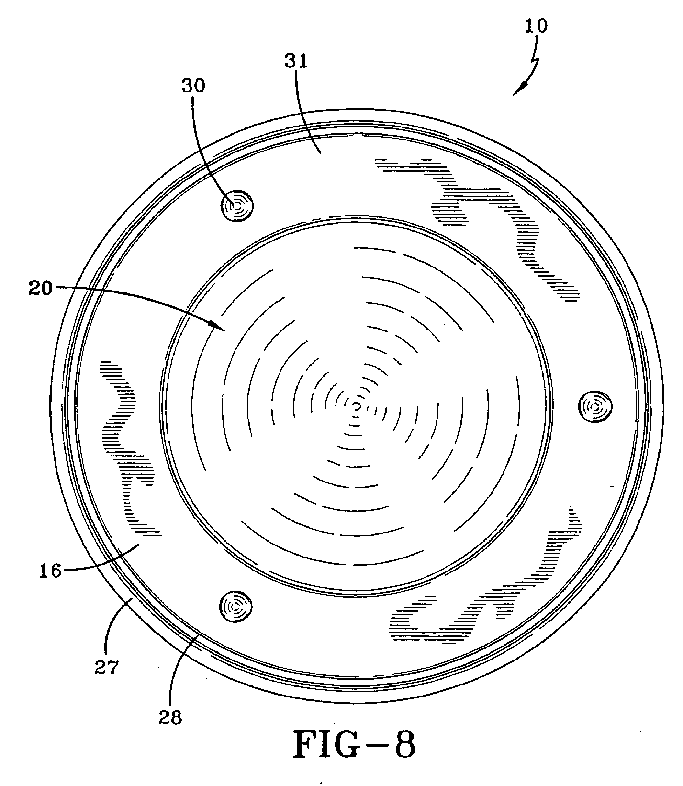

With reference to Figs. 7 and 8, shell 11 or center 20 may be provided with one or more supports or feet 30. The feet 30 may be spaced regularly about the shell 11 and may lie along a common circumference, as shown in Fig. 8, to avoid tipping. The feet 30 may be of any shape including a dome-like shape(Fig. 7), and extend downward to elevate the shell 11 from a supporting surface. A foot 30 in the center 20 may further be used to strengthen the center 20 and prevent it from deforming under the weight of plant material P, decorative objects O, or liquid L. In terms of production the feet 30 may be attached in any manner including direct formation of the feet 30 with the shell 11 during molding. For example, shell 11 may be formed from a sheet of material with the feet 30 included such that the feet 30 bulge outwardly from the bottom 31 of the shell 11.

As best shown in Fig. 2, the shell 11 may define a recessed channel 16 between its outer wall 17 and center 20. To accommodate the various shapes described above, it may be desirable to provide a channel 16 having a shape tailored to the growth material shape. For example, the channel 16 of shell 11, shown, has an annular shape that generally conforms to the cylindrical shape of the media 12. It will be appreciated that the channel 16 and shell 11 do not necessarily have to have the same shape.

In defining the recessed channel 16, the center 20 may be raised relative to the base of shell 11 forming a center sidewall 22. With reference to Fig. 7, the height of the center 20, however, is less than the media 12. In other words the top surface 21 of center 20 (center top surface 21) lies below the top surface 19 of media 12 and is encompassed by the inner surface 14 of media 12 to define a reservoir 15. The center 20 has a convex profile such that it slopes downwardly from a central axis A as it extends radially outward therefrom. When liquid L, such as water is poured into reservoir 15, the slope of the convex center 20 channels the liquid L (Fig. 9) radially outward toward the media 12. In this way, the user may supply liquid L to the media 12 by pouring liquid L into the reservoir 15 defined by the media 12 and center 20. In contrast to the normal practice of watering the media from above, this type of watering directs the liquid L to the lower portion, or base, generally indicated at 25, of the media 12. By wetting the base 25, ideal watering conditions are achieved encouraging the roots R of plant material P to migrate downward to seek the water supply. This type of growth enhances the development of the root system leading to longer lasting, healthier floral displays.

Referring to Figs. 9-10, the floral display device 10, shown, may form a part of a floral display system, generally indicated by the numeral 50. The floral display system 50 generally includes a floral display device 10, as described above, plant material P inserted into the media 12 of device 10, and optionally decorative objects O placed within the reservoir 15 or about the device 10.

In one combination depicted in Fig. 9, the plant material P is inserted in the top and outside surfaces 19, 23 of media 12 leaving the interior surface 14 bare. As shown, the plant material P may include live plants, bulbs or cut flowers, generally referred to by the letter F, greenery, generally indicated by the letter G, such as leafy plants, pine boughs, moss, and grasses among others, and/or fruit, generally indicated by the letter T, including, for example, berries, pine cones, citrus fruits and others. The foregoing are provided as examples of plant material P; it being understood that other organic materials commonly used in the floral design industry may be used as well. As shown, the plant material P may be placed on any surface of media 12 and be located at any point on the media 12. As shown, the plant material P may extend completely around the perimeter of the media 12. Decorative objects O may also be inserted into the media 12 or plant material P to further develop the display system.

It may be desirable to place decorative objects O within the reservoir 15. For example, as shown in Fig. 4, the decorative object O may include a container, generally indicated by the numeral 55, such as a globe or bowl, among others. In the example shown, container 55 is a bowl 56 that may be transparent, as shown, and filled with water or another liquid for purposes of floating candles 57, as shown, holding fish, or for serving purposes, i.e., when a punch bowl is placed on the center 20. Leaving inner surface 14 bare ,facilitates the insertion of larger decorative objects O, like a bowl, candle or globe, allowing them to completely fill the opening 13 within the media 12.

As will be appreciated, the plant material P may, however, be attached on any one or more of the exposed surfaces of media 12. In the example floral display system shown in Fig. 10, generally indicated by the numeral 60, the plant material P covers all of the media's surfaces. System 60 also provides an example of using alternative decorative objects O, such as, sand and stone 62 and alternative plant material P such as reeds or grasses 63, and dried flowers 64. It will be appreciated that any decorative object O may be used in the reservoir 15 and thus, the present invention is not limited to the depicted examples.

Based upon the foregoing disclosure, it should now be apparent that the use of the floral display device and system described herein will carry out the objects set forth hereinabove. It is, therefore, to be understood that any variations evident fall within the scope of the claimed invention. Thus, the scope of the invention shall include all modifications and variations that may fall within the scope of the attached claims.

## Claims

1. A floral display system comprising:
an upstanding wall of media (12) having a top surface (19) and a bottom surface, said top surface (19) being vertically spaced from said bottom surface, and an outer surface (23) and an inner surface (14) extending between said top and bottom surfaces, said inner surface (14) and said outer surface (23) being laterally spaced from each other;
said inner surface (14) defining an opening (13); and
a water impervious center (20) spanning said opening (13), wherein said center (20) has a center top surface (21) said center top surface (21) being located below said top surface (19) of said media (12) to form a reservoir (15) between said center (20) and said wall of media (12), **characterized in that** said center (20) is convex.

2. The floral display system of claim 1, wherein said center (20) forms part of a shell (11) extending radially outwardly from said center (20) below said media (12), said media (12) being attached to said shell (11).

3. The floral display system of claim 2, further comprising an upstanding wall (17) extending from a periphery (11a) of said shell (11), said wall (17) being located radially outward of said media (12).

4. The floral display system of claim 3, wherein said wall (17) extends radially outward as it extends axially upward.

5. The floral display system of claim 4, further comprising a flange (27) extending radially outward from said wall (17).

6. The floral display system of claim 3, wherein said wall (17) extends upwardly less than said media (12).

7. The floral display system of claim 1, wherein said center (20) slopes downwardly as it extends radially outward toward said media.

8. The floral display system of claim 1, further comprising a shell (11) having an upstanding peripheral wall (17) located outward of said media (12), a recessed channel (16) formed radially inward of said wall (17) for receiving said media (12), and wherein said center (20) is formed as a part of said shell (11) radially inward of said channel (16).

9. The floral display system of claim 8, wherein said shell (11) includes at least one foot (30).

10. The floral display system of claim 1, further comprising plant material (P) inserted into at least one surface (19, 23) of said media (12) and a decorative object (O) supported on said center (20) in said reservoir (15).

11. The floral display system of claim 10, wherein said decorative object (O) is a container (55).

12. The floral display system of claim 11, wherein said container (55) is a bowl (56).

13. The floral display system of claim 10, wherein said plant material (P) includes cut flowers (F).

14. The floral display system of claim 1, wherein said media (12) is a floral foam.

15. A method of making a floral display system comprising the steps of:
providing a water impervious shell (11) having a wall of media (12) extending upward therefrom, said wall of media (12) defining an open reservoir (15) between an inner surface (14) of said media (12) and a center (20) of said shell (11);
implanting plant material (P) within said media (12); and
wetting said media (12) by pouring water into said reservoir,
**characterized by** the further step of
sloping said center (20) toward said media (12) to channel the water toward said media (12).

## Patentansprüche

1. Florales Präsentationssystem, umfassend:
eine aufrechte Wand aus einem Medium (12), das eine obere Fläche (19) und eine untere Fläche besitzt, wobei die obere Fläche (19) vertikal von der unteren Fläche beabstandet ist; und das eine Außenfläche (23) und eine Innenfläche (14)aufweist, die sich zwischen der oberen Fläche und der unteren Fläche erstrecken, wobei die Innenfläche (14) und die Außenfläche (23) lateral voneinander beabstandet sind und die Innenfläche (14) eine Öffnung (13) definiert; sowie
ein wasserundurchlässiges Zentrum(20), das die Öffnung (13) überspannt, wobei das Zentrum (20) eine obere Zentrums-Fläche (21) aufweist, die zur Bildung eines Reservoirs (15) zwischen dem Zentrum (20) und der Wand des Mediums (12) unter der oberen Fläche (19) des Mediums (12) angeordnet ist,
**dadurch gekennzeichnet, dass** das Zentrum (20) konvex ist.

2. Florales Präsentationssystem nach Anspruch 1, wobei das Zentrum (20) einen Teil einer Schale (11) bildet, die sich vom Zentrum (20) aus unter dem Medium (12) radial nach außen erstreckt, wobei das Medium (12) auf die Schale (11) aufgesetzt ist.

3. Florales Präsentationssystem nach Anspruch 2, das weiterhin eine aufrechte Wand (17) umfasst, die sich von einer Peripherie (11a) der Schale (11) aus erstreckt, wobei die Wand (17) radial außerhalb des Mediums (12) angeordnet ist.

4. Florales Präsentationssystem nach Anspruch 3, wobei sich die Wand (17) radial nach außen erstreckt während sie sich axial nach oben erstreckt.

5. Florales Präsentationssystem nach Anspruch 4, das weithin einen Flansch (27) umfasst, der sich von der Wand (17) aus radial nach außen erstreckt.

6. Florales Präsentationssystem nach Anspruch 3, wobei sich die Wand (17) weniger weit aufwärts erstreckt, als das Medium (12).

7. Florales Präsentationssystem nach Anspruch 1, wobei das Zentrum (20) nach unten abfällt, während es sich radial nach außen zu dem Medium hin erstreckt.

8. Florales Präsentationssystem nach Anspruch 1, das weiterhin eine Schale (11) umfasst, die eine aufrechte Umfangswand (17) aufweist, die sich außerhalb des Mediums (12) befindet, wobei radial innenliegend von der Wand (17) ein ausgesparter Kanal (16) zur Aufnahme des Mediums (12) gebildet ist, und das Zentrum (20) radial einwärts vom Kanal (16) als Teil der Schale (11) ausgeformt ist.

9. Florales Präsentationssystem nach Anspruch 8, wobei die Schale (11) mindestens einen Fuß (30) umfasst.

10. Florales Präsentationssystem nach Anspruch 1, das weiterhin Pflanzenmaterial (P), welches in mindestens eine Fläche (19, 23) des Mediums (12) eingesetzt ist, und ein Dekorationsobjekt (O) umfasst, welches auf dem Zentrum (20) im Reservoir (15) abgestützt wird.

11. Florales Präsentationssystem nach Anspruch 10, wobei das Dekorationsobjekt (O) ein Behälter (55) ist.

12. Florales Präsentationssystem nach Anspruch 11, wobei der Behälter (55) eine Schüssel (56) ist.

13. Florales Präsentationssystem nach Anspruch 10, wobei das Pflanzenmaterial (P) Schnittblumen (F) enthält.

14. Florales Präsentationssystem nach Anspruch 1, wobei des Medium (12) ein Blumensteckschaum ist.

15. Verfahren zum Herstellen eines floralen Präsentationssystems, das folgende Schritte umfasst:
Bereitstellen einer wasserundurchlässigen Schale (11), die eine Wand aus einem Medium (12) besitzt, welche sich von der Schale aus aufwärts erstreckt, wobei die Wand aus dem Medium (12) zwischen einer Innenfläche (14) des Mediums (12) und einem Zentrum (20) der Schale (11) ein offenes Reservoir (15) definiert;
Einsetzen von Pflanzenmaterial (P) in das Medium (12) und Befeuchten des Mediums (12) durch Einfüllen von Wasser in das Reservoir,
**gekennzeichnet durch** den weiteren Schritt des Abfallenlassens des Zentrums (20) auf das Medium (12) zu, um das Wasser zum Medium (12) hin zu leiten.

## Revendications

1. Système de présentation florale comprenant: une enceinte de support dressée (12) présentant une surface supérieure (19) et une surface inférieure, ladite surface supérieure (19) étant espacée verticalement de ladite surface inférieure, et une surface externe (23) et une surface interne (14) s'étendant entre lesdites surfaces supérieure et inférieure, ladite surface interne (14) et ladite surface externe (23) étant espacées latéralement l'une de l'autre; ladite surface interne (14) définissant une ouverture (13) ; et un centre imperméable à l'eau (20) qui couvre ladite ouverture (13), dans lequel ledit centre (20) a une surface supérieure centrale (21), ladite surface supérieure centrale (21) se trouvant au-dessous de ladite surface supérieure (19) dudit support (12) pour former un réservoir (15) entre ledit centre (20) et ladite enceinte de support (12), **caractérisé en ce que** ledit centre (20) est convexe.

2. Système de présentation florale selon la revendication 1, dans lequel ledit centre (20) fait partie d'une coque (11) s'étendant radialement à l'extérieur dudit centre (20) au-dessous dudit support (12), ledit support (12) étant attaché à ladite coque (11).

3. Système de présentation florale selon la revendication 2, comprenant en outre une enceinte droite (17) s'étendant d'une périphérie (11a) de ladite coque (11), ladite enceinte (17) se trouvant radialement à l'extérieur dudit support (12).

4. Système de présentation florale selon la revendication 3, dans lequel ladite enceinte (17) s'étend radialement vers l'extérieur au fur et à mesure qu'elle s'étend axialement vers le haut.

5. Système de présentation florale selon la revendication 4, comprenant en outre une collerette (27) s'étendant radialement à l'extérieur de ladite enceinte (17).

6. Système de présentation florale selon la revendication 3, dans lequel ladite enceinte (17) s'étend moins vers le haut que ledit support (12).

7. Système de présentation florale selon la revendication 1, dans lequel ledit centre (20) est en pente descendante au fur et à mesure qu'il s'étend radialement vers l'extérieur en direction dudit support.

8. Système de présentation florale selon la revendication 1, comprenant en outre une coque (11) ayant une enceinte périphérique droite (17) située à l'extérieur dudit support (12), un canal évidé (16) formé radialement à l'intérieur de ladite enceinte (17) pour recevoir ledit support (12), et dans lequel ledit centre (20) est réalisé comme partie de ladite coque (11) radialement à l'intérieur dudit canal (16).

9. Système de présentation florale selon la revendication 8, dans lequel ladite coque (11) comprend au moins un pied (30).

10. Système de présentation florale selon la revendication 1, comprenant en outre des matières végétales (P) insérées dans au moins une surface (19, 23) dudit support (12) et un objet décoratif (O) maintenu sur ledit centre (20) dans ledit réservoir (15).

11. Système de présentation florale selon la revendication 10, dans lequel ledit objet décoratif (O) est un récipient (55).

12. Système de présentation florale selon la revendication 11, dans lequel ledit récipient (55) est un bol (56).

13. Système de présentation florale selon la revendication 10, dans lequel lesdites matières végétales (P) comprennent des fleurs coupées (F).

14. Système de présentation florale selon la revendication 1, dans lequel ledit support (12) est une mousse florale.

15. Procédé de fabrication d'un système de présentation florale comprenant les étapes de: fourniture d'une coque (11) imperméable à l'eau présentant une enceinte de support (12) s'étendant vers le haut à partir de celle-ci, ladite enceinte de support (12) définissant un réservoir (15) ouvert entre une surface interne (14) dudit support (12) et un centre (20) de ladite coque (11) ; implantation des matières végétales (P) dans ledit support (12) ; et mouillage dudit support (12) en versant de l'eau dans ledit réservoir, **caractérisé par** l'étape supplémentaire d'inclinaison dudit centre (20) vers ledit support (12) afin de canaliser l'eau vers ledit support (12).
